Europäisches Patentamt

European Patent Office

Office européen des brevets

(19)

(11) Veröffentlichungsnummer : **0 051 844**
**B1**

(12) **EUROPÄISCHE PATENTSCHRIFT**

(45) Veröffentlichungstag der Patentschrift :
30.07.86

(21) Anmeldenummer : **81109465.5**

(22) Anmeldetag : **31.10.81**

(51) Int. Cl.⁴ : **A 01 K 31/22, A 01 K 45/00**

(54) **Tragboden für Mastgeflügelstallung.**

(30) Priorität : **07.11.80 DE 3042043**

(43) Veröffentlichungstag der Anmeldung :
**19.05.82 Patentblatt 82/20**

(45) Bekanntmachung des Hinweises auf die Patenterteilung : **30.07.86 Patentblatt 86/31**

(84) Benannte Vertragsstaaten :
**BE CH DE FR GB IT LI NL SE**

(56) Entgegenhaltungen :
**DE-A- 2 007 478**
**DE-C-    14 263**
**FR-A-    328 995**
**FR-A- 2 092 387**
**FR-A- 2 104 284**
**US-A- 4 213 422**

(73) Patentinhaber : **Nagel, Hans-Joachim, Dr.**
**Contrescarpe 27**
**D-2800 Bremen 1 (DE)**

(72) Erfinder : **Nagel, Hans-Joachim**
**Contrescarpe 27**
**D-2800 Bremen (DE)**
Erfinder : **Schumacher, Egon**
**Landeshuter Strasse**
**D-2847 Barnstorf (DE)**

(74) Vertreter : **Bolte, Erich, Dipl.-Ing. et al**
**c/o Meissner & Bolte Patentanwälte Hollerallee 73**
**D-2800 Bremen (DE)**

**Beschreibung**

Die Erfindung betrifft eine Einrichtung für die Haltung von Kleintieren, insbesondere Mastgeflügel, wie Hähnchen, gemäß dem Oberbegriff des Patentanspruches 1.

Die Aufzucht von Mastgeflügel, insbesondere Hähnchen, findet in großflächigen Stallungen auf einem durchgehenden Stallboden statt. Die in einer Stallung aufgezogenen Hähnchen werden gleichzeitig abtransportiert, wenn sie das erwünschte Gewicht erreicht haben.

Um die bei dieser Kleintierhaltung problematische Entstallung zu erleichtern, ist bereits vorgeschlagen worden, oberhalb des Stallbodens einen gitterförmigen Tragboden vorzusehen, der wie ein Transportband ausgebildet ist. Der aus einzelnen, nebeneinanderliegenden Bahnen bestehende Tragboden wird unter Mitnahme der Hähnchen zu einer Seite der Stallung bewegt. Im Bereich einer Umlenkung des Tragbodens gelangen die Hähnchen auf ein quergerichtetes Transportband zum Abfördern aus der Stallung (DE-A-2 703 968). Der Tragboden bzw. die Bahnen desselben bestehen bei diesem bekannten Vorschlag aus einzelnen, gelenkig miteinander verbundenen Gitterstäben aus Kunststoff. Diese sind drehbar mit Lagerhülsen auf quergerichteten Tragstangen angeordnet. Eine derartige Ausbildung des Tragbodens bzw. der Bahnen desselben hat sich in der Praxis als ungünstig erwiesen. Die Auflage ist zu hart für die empfindlichen Tiere. Durch die Rippen entstehen Druckstellen, insbesondere im Bereich der Brust der Tiere, wenn diese längere Zeit auf dem Tragboden ruhen. Darüber hinaus ist die Relativbewegung zwischen den Gitterelementen bzw. -stäben ungünstig wegen der Gefahr von Verschmutzungen, Kotfestsetzungen u. dgl.

Aus der FR-A-2 104 284 ist eine Einrichtung für die Haltung von Kleintieren bekannt, die mit einem gitterförmigen Tragboden aus elastischem, weichem Kunststoff versehen ist. Dadurch und durch die Anordnung einer Mehrzahl von wulstartigen, weichen Erhöhungen an der Oberseite des gitterförmigen Tragbodens werden im Bereich der Brust der Tiere während der Ruhe entstehende erhöhte Belastungen weitgehend vermieden. Der bekannte Tragboden ist jedoch nicht als Förderer ausgebildet, der von sich quer zur Förderrichtung sowie etwa parallel zur Tragbodenebene erstreckenden, im wesentlichen unnachgiebigen Tragstangen durchsetzt ist. Die Auflage für die empfindlichen Tiere im Bereich der Tragstangen ist daher relativ hart. Das gleiche gilt im Verbindungsbereich zwischen aneinandergrenzenden Tragboden-Matten. Es lassen sich daher Druckstellen an den Tieren nicht vermeiden, wenn diese längere Zeit im Bereich der Tragstangen und/oder in Verbindungsbereich zwischen aneinandergrenzenden Tragboden-Matten ruhen.

Der Erfindung liegt daher die Aufgabe zugrunde, eine Einrichtung der eingangs genannten Art dahingehend weiterzuentwickeln und zu verbessern, daß die Tiere auch im Bereich der Tragstangen und/oder im Verbindungsbereich zwischen aneinandergrenzenden Tragboden-Matten keine empfindlichen Druckstellen erfahren.

Diese Aufgabe wird erfindungsgemäß durch die kennzeichnenden Maßnahmen nach Patentanspruch 1 und/oder die folgenden Ansprüche gelöst.

Der erfindungsgemäß ausgebildete Tragboden besteht also nicht mehr aus relativ zueinander bewegbaren Gliedern, sondern aus einem durchgehenden Gitter- bzw. Netzwerk aus fugenfrei miteinander verbundenen, sich kreuzenden Tragprofilen.

Die besondere Auswahl des Werkstoffes — insbesondere Weich-PVC — bewirkt einerseits eine Elastizität des daraus gebildeten Tragbodens bzw. der Bahnen, derart, daß diese wie Förderbänder umlenkbar sind. Zum anderen wird hierdurch eine tiergerechte Lagerfläche geschaffen, die mit einer weichen Oberfläche der Tragelemente (Tragprofile) ausgestattet ist. Die vorzugsweise im Tauchverfahren hergestellten Tragprofile des Gitterwerks haben eine sehr glattflächige, leicht verformbare Oberfläche, die den Tieren sowohl Bewegungen als auch ein belastungsfreies Ruhen auf dem Tragboden ermöglicht.

Des weiteren ist durch die Erfindung sichergestellt, daß die Tiere auch im Bereich der relativ unnachgiebigen Tragstangen und/oder im Verbindungsbereich zwischen aneinandergrenzenden Tragboden-Matten keine Druckstellen erfahren.

Weitere Merkmale der Erfindung beziehen sich auf konstruktive Details im Bereich der Tragstangen und im Verbindungsbereich zwischen aneinandergrenzenden Tragboden-Matten.

Ausführungsbeispiele der Erfindung werden nachfolgend anhand der Zeichnungen näher erläutert. Es zeigen :

Figur 1 einen Querschnitt durch einen im Sinne der Erfindung ausgebildeten Stall, stark vereinfacht,

Figur 2 einen Ausschnitt des Stalls bzw. eines Tragbodens in perspektivischer Darstellung,

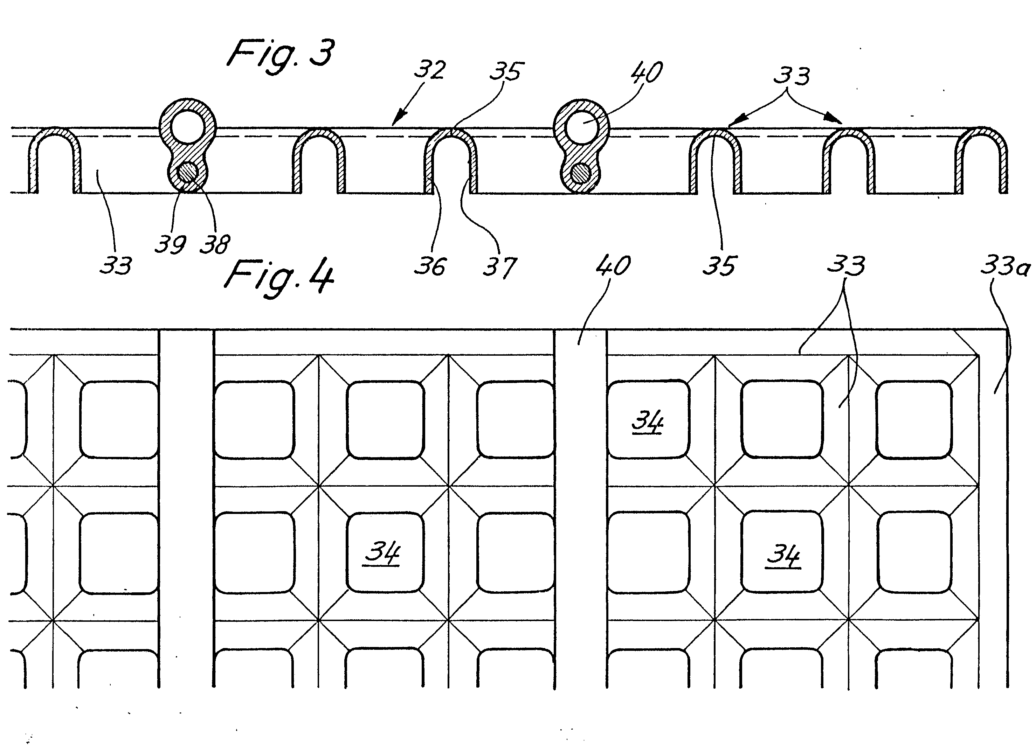

Figur 3 einen Längsschnitt durch einen Teil des Tragbodens in vergrößertem Maßstab,

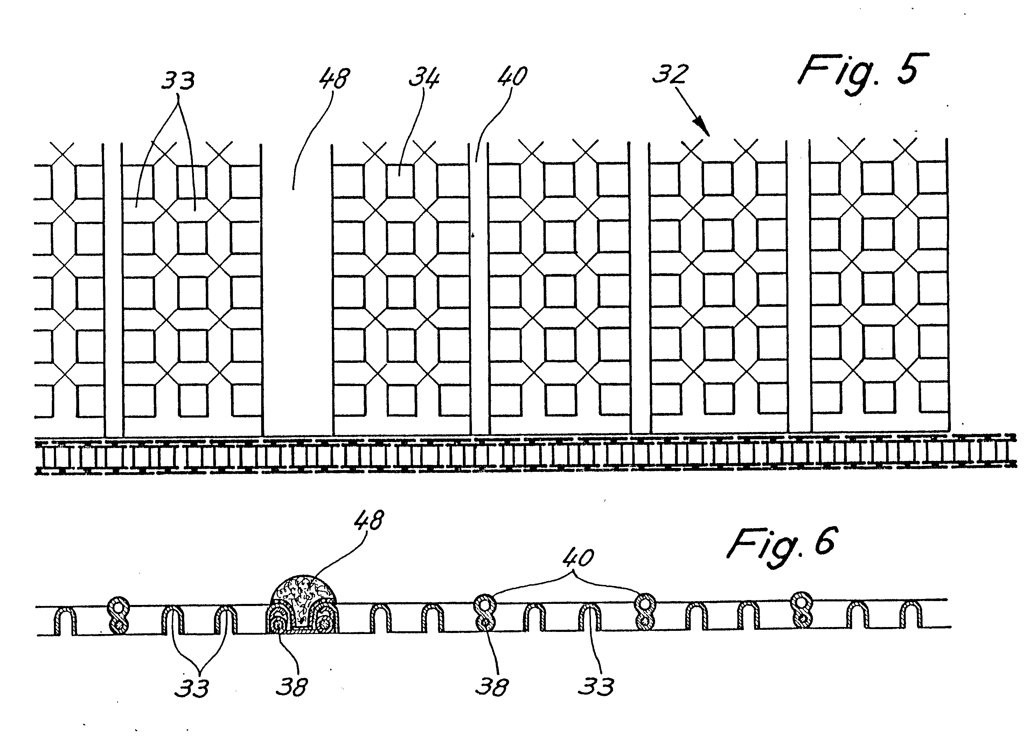

Figur 4 einen Ausschnitt des Tragbodens im Grundriß,

Figur 5 einen größeren Bereich des Tragbodens mit einem seitlichen Förderorgan, im Grundriß,

Figur 6 einen Längsschnitt zu der Einzelheit gemäß Fig. 5,

Figur 7 einen Querschnitt im Bereich der Verbindung zweier Matten in vergrößertem Maßstab,

Figur 8 eine Einzelheit einer Tragkonstruktion für den Tragboden in Seitenansicht,

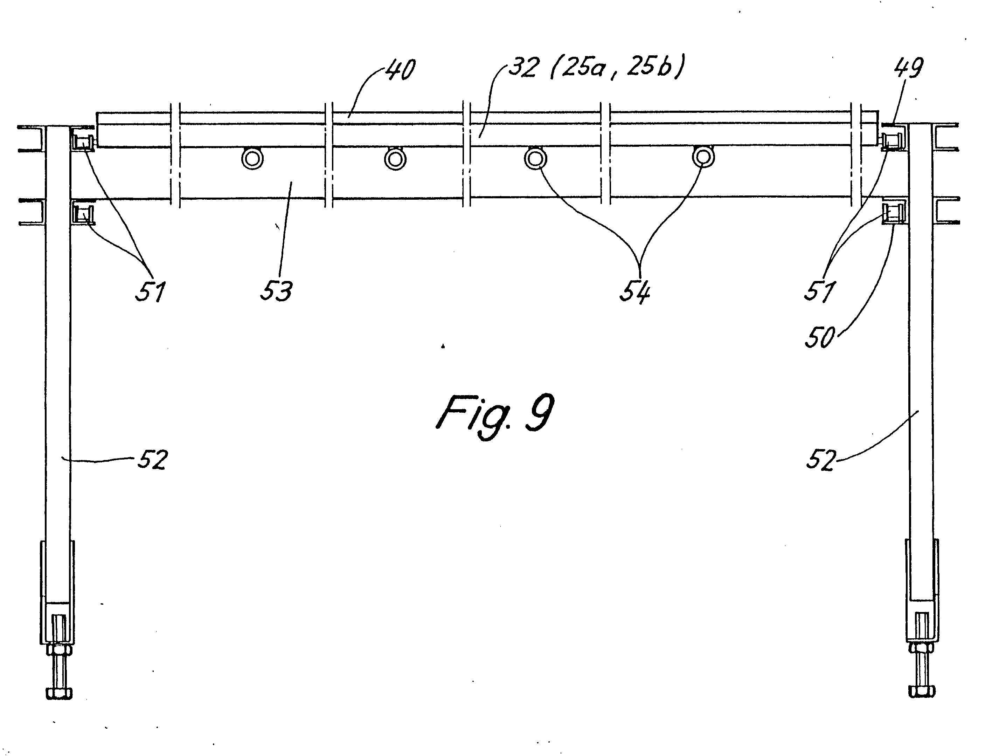

Figur 9 einen Querschnitt durch eine Bahn des Tragbodens mit Tragwerk,

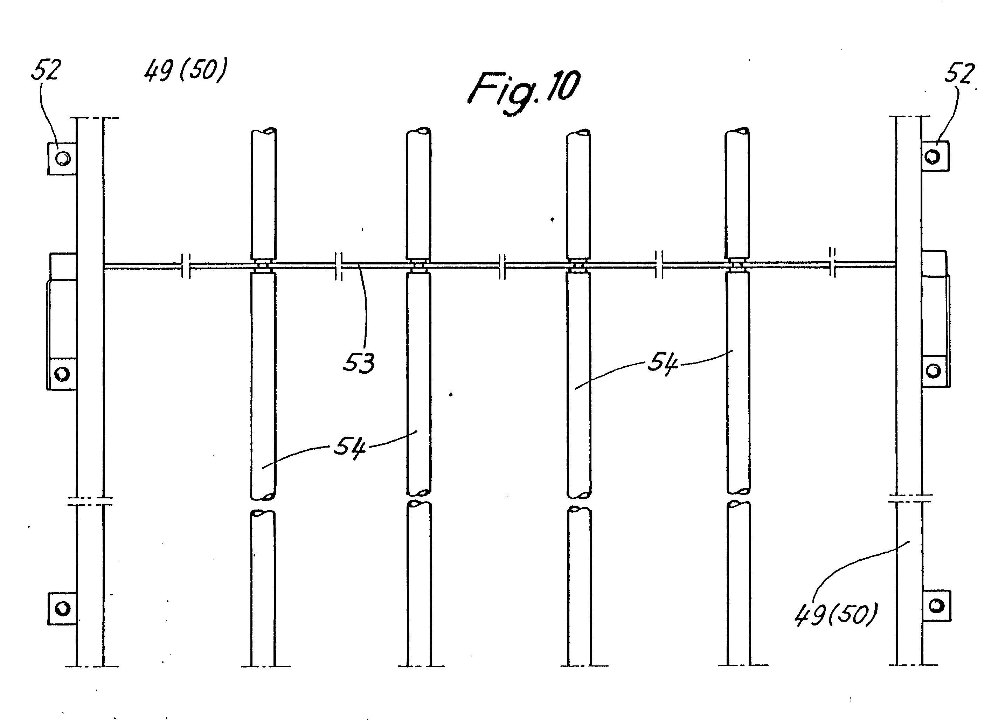

Figur 10 einen Grundriß zu Fig. 9,

Figur 11 einen Querschnitt entsprechend Fig. 7 einer anderen Ausführungsform der Klemmverbindung zwischen aneinanderschließenden Matten.

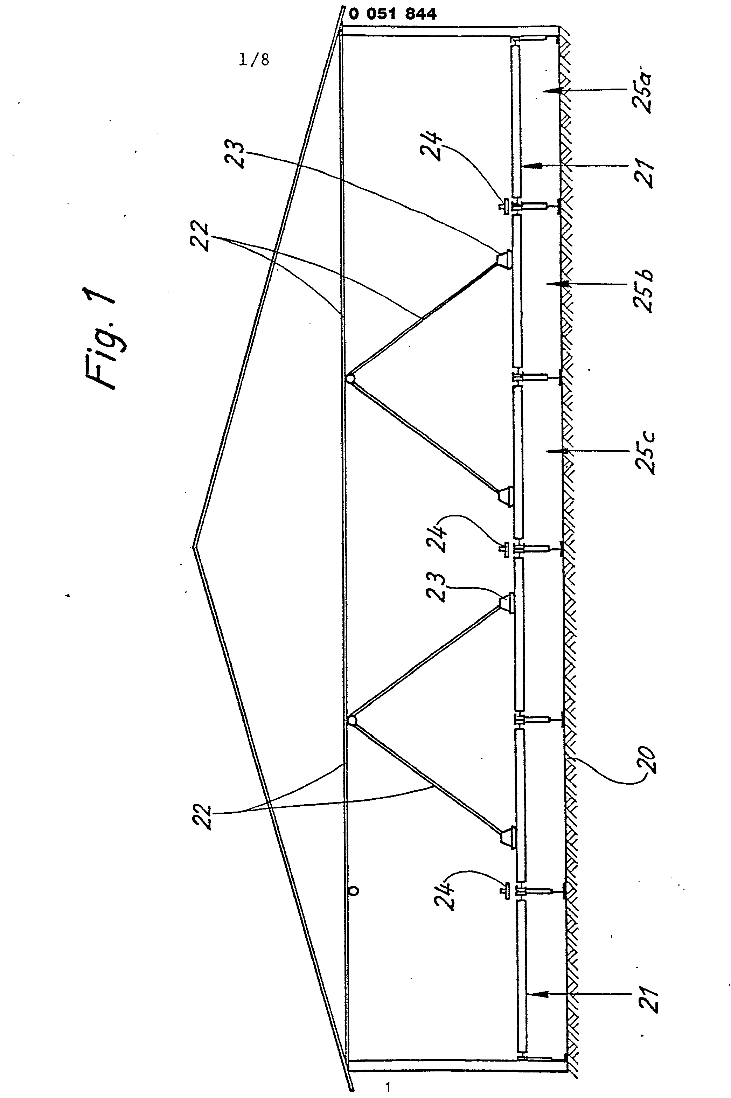

In Fig. 1 ist in schematischem Querschnitt eine Stallung zur Aufnahme von beispielsweise Aufzuchthähnchen dargestellt. Innerhalb der Stallung ist oberhalb eines Stallbodens 20 und mit Abstand von diesem ein Tragboden 21 angeordnet. Dieser bildet die Lauf- bzw. Standfläche für die Tiere. Oberhalb des Tragbodens 21 ist ein System von Rohren 22 für die Versorgung von Futtergeräten 23 vorgesehen. Darüber hinaus erstrecken sich ebenfalls oberhalb des Tragbodens 21 gesonderte Tränkeeinrichtungen 24.

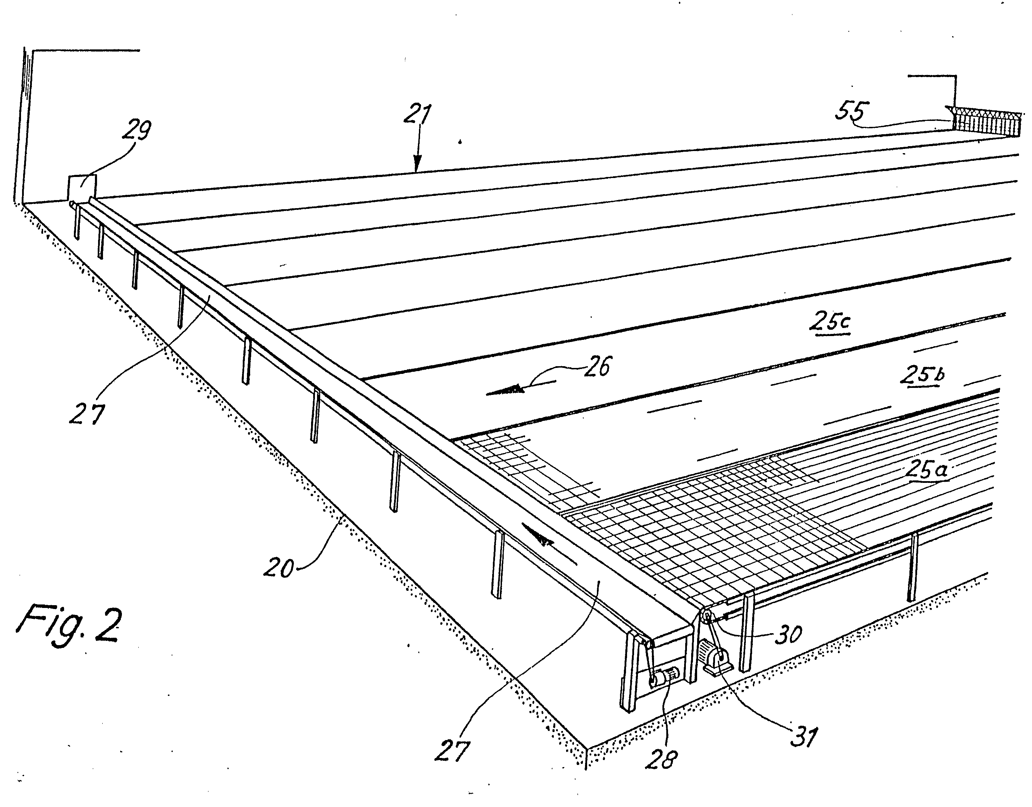

Der Tragboden 21 ist insgesamt als Förderer für die Tiere ausgebildet und über die volle Breite der Stallung gesehen bewegbar. Zu diesem Zweck ist der Tragboden 21 in einzelne Bahnen 25a, 25b, 25c unterteilt. Diese werden zweckmäßigerweise gemeinsam und gleichzeitig in Förderrichtung (Pfeil 26 in Fig. 2) bewegt.

Die Transportbewegung der Bahnen 25a, 25b... läuft bei den vorliegenden Ausführungsbeispielen zu einem Querförderer 27, der hier am Rand der Stallung angeordnet ist. Die Tiere werden durch die entsprechende Bewegung des Tragbodens 21 dem Querförderer 27 zugeführt und auf diesem abgesetzt. Der Querförderer 27 wird durch einen Motor 28 quer zum Tragboden 21 angetrieben. Die Tiere werden beispielsweise durch eine Öffnung 29 in der Stallwand abtransportiert.

Die flexiblen bzw. verformbaren Bahnen 25a, 25b... laufen an den Enden über Umlenkwalzen. In Fig. 2 ist die dem Querförderer 27 zugekehrte Umlenkwalze 30 gezeigt, die zugleich Triebwalze ist für die Bahnen 25a, 25b... Die Umlenkwalze 30 wird durch einen Motor 31 angetrieben.

In besonderer Weise sind die Bahnen 25a, 25b... ausgebildet. Diese bestehen aus einzelnen miteinander verbundenen Matten 32, die eine durchgehende Bahn bilden. Diese wiederum bilden nebeneinanderliegend den durchgehenden Tragboden 21.

Die Matten 32 bestehen im wesentlichen aus einem Geflecht bzw. Gitterwerk aus längs- und quergerichteten Tragprofilen 33 aus weichem, hochelastischem Werkstoff, insbesondere PVC. Die miteinander verbundenen Tragprofile 33 lassen im vorliegenden Fall quadratische Gitteröffnungen 34 frei, die in der Größe den naturgegebenen Besonderheiten der Tiere angepaßt sind. Als günstig haben sich Abmessungen wie folgt erwiesen: Die Tragprofile 33 haben eine Breite von 13 mm. Die freie Kantenlänge der Gitteröffnungen 34 beträgt 18,75 mm. Daraus ergibt sich ein Achsabstand der Tragprofile 33 voneinander von 31,75 mm. Die Höhe eines Tragprofils 33 ist mit 16 mm vorgesehen. Die Länge einer Matte 32 in Längsrichtung der Bahn 25a, 25b... beträgt hier 394 mm, während die Breite und damit die Breite der Bahn mit 1 918 mm vorgesehen ist.

Die Tragprofile 33 haben bei dem gezeigten Ausführungsbeispiel einen U-förmigen Querschnitt mit einem nach oben weisenden bogenförmigen bzw. halbkreisförmigen Steg 35 und nach unten gerichteten Schenkeln 36 bzw. 37. Die Tragprofile 33 sind demnach nach unten offen. Die Sitz- bzw. Liegefläche auf den Tragprofilen 33 ist abgerundet und durch die Auswahl des Materials weich und glattflächig. Die Wandungsstärke der Tragprofile kann 2 mm betragen.

Zur Aussteifung der Matten 32 gegen Durchhängen, aber auch zur Verbindung derselben mit einer noch zu beschreibenden Fördereinrichtung, sind Versteifungs- bzw. Tragorgane in die Matten 32 eingearbeitet. Beim vorliegenden Ausführungsbeispiel sind in Abständen voneinander quergerichtete Tragstangen 38 in die Matten 32 eingeformt. Die Tragstangen 38 erstrecken sich im unteren Querschnittsbereich der Matte 32 in einem im vorliegenden Fall kreisförmigen Profil 39. Das gezeigte Ausführungsbeispiel ist mit drei derartigen Tragstangen 38 innerhalb der Matte 32 ausgerüstet.

Um in diesem Bereich keine erhöhte Druckfestigkeit der Matten 32 zu schaffen, sind oberhalb der Tragstangen 38 weiche, elastisch nachgiebige Abdeckungen vorgesehen, und zwar in Gestalt von durchgehenden Hohlkörpern 40 aus dem Werkstoff der Matte 32. Die mit kreisförmigem Querschnitt ausgebildeten Hohlkörper 40 erstrecken sich etwa mit dem halben Querschnitt oberhalb der Ebene der Matte 32, bilden dadurch eine quer über die Matte 32 durchlaufende wulstartige Erhöhung. Diese dient den Tieren zum Aufsitzen oder Abstützen.

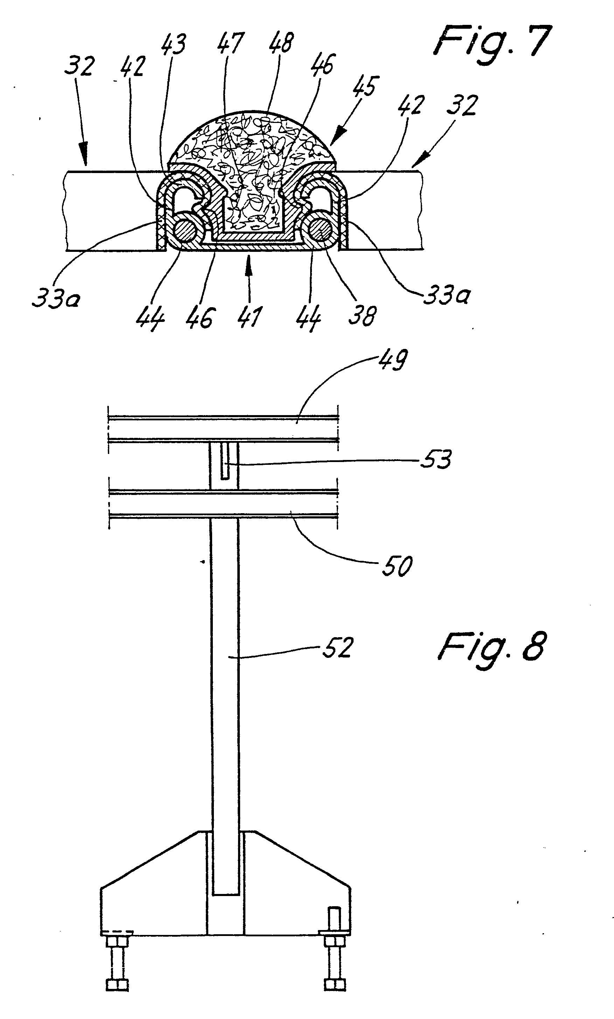

Die Matten 32 einer Bahn 25a, 25b... sind in Längsrichtung derselben weitgehend fugenfrei miteinander verbunden, und zwar über die gesamte Breite der Bahn. Bei dem vorliegenden Ausführungsbeispiel sind besondere Mattenkupplungen vorgesehen (Fig. 7), die aus zwei Klemmprofilen bestehen. Ein Unterprofil 41 tritt mit passenden Klemmschenkeln 42 von unten her in ein Tragprofil 33a am Rand der miteinander zu verbindenden Matten 32 ein. Der Querschnitt des Tragprofils 33a wird durch den Klemmschenkel 42 weitgehend ausgefüllt, und zwar durch einen oberen Stützbogen 43 und durch ein im unteren Bereich sich erstreckendes Rohrprofil 44.

Von oben her wird in das rinnenförmige Unterprofil 41 ein Oberprofil 45 eingeführt, nämlich eingedrückt, das unter Festklemmen der Tragprofile 33a mit dem Unterprofil 41 eine Schnappverbindung eingeht. Seitlich am Oberprofil 45 angeordnete durchgehende Nasen 46 treten in den Bereich zwischen Stützbogen 43 und Rohrprofil 44 der Klemmschenkel 42 ein, und zwar unter Eindrücken und Verformen des zugekehrten Schenkels 36 bzw. 37 der Tragprofile 33a. Durch die verhältnismäßig starren Unterprofile 41 und Oberprofile 45 wird eine über die volle Breite der Bahn 25a, 25b... durchgehende, belastbare Verbindung geschaffen, die an Ort und Stelle leicht herstellbar und wieder lösbar ist.

Das Oberprofil 45 bzw. der tragende Teil desselben ist nach oben hin schalenförmig aufgeweitet. In den so gebildeten offenen Hohlraum ist ein weiches, hochelastisches Füllmaterial, insbesondere Schaumstoff 47, eingesetzt. Dieser ragt nach oben hin über das Oberprofil 45 sowie über die Ebene der Matte 32 hinweg und bildet einen elastischen, weichen Wulst 48. Dieser wirkt als weiche, nachgiebige Abdeckung der im übrigen starren Mattenkupplung und zugleich als Erhöhung zum Aufsitzen oder Aufliegen der Tiere.

Die Bahnen 25a, 25b... sind in seitlichen Führungen abgestützt, nämlich in U-förmigen Tragschienen 49, 50. Die oberen Tragschienen 49 dienen zur Aufnahme eines Obertrums und die unteren Tragschienen 50 zur Aufnahme eines Untertrums einer endlosen Förderkette 51. Die Tragschienen 49, 50 sind jeweils zu beiden Seiten von mittig zwischen benachbarten Bahnen 25a, 25b... angeordneten, aufrechten Tragstützen 52 angeordnet. Die oberen Tragschienen 49 schließen bündig mit den Tragstützen 52 ab.

Die Bahnen 25a, 25b... bzw. Matten 32 sind mit den bereits beschriebenen Tragstangen 38 an die Förderketten 51 angeschlossen. Die Tragstangen 38 treten mit ihren Enden in Hohlbolzen der Ketten 51 ein, so daß eine unmittelbare Verbindung mit diesen besteht.

Damit auch im Bereich der kritischen Mattenkupplungen eine exakte Führung und Förderung gegeben ist, sind die Rohrprofile 44 der Klemmschenkel 42 des Unterprofils 41 jeweils ebenfalls mit durchgehenden Tragstangen 38 versehen.

Die Tragstützen 52 sind durch Querträger 53 miteinander verbunden, die hier als Flachprofile ausgebildet sind. Zwischen den in Längsrichtung der Bahnen 25a, 25b... mit Abstand angeordneten Querträgern 53 erstrecken sich Längsabstützungen 54, die hier als Rohre ausgebildet sind. Mehrere derartiger Längsabstützungen 54 sind innerhalb einer Bahn 25a, 25b... nebeneinander angeordnet. Die Längsabstützungen 54 lagern in Ausnehmungen der Querträger 53 im oberen Bereich derselben.

Die Längsabstützungen 54 erfüllen eine mehrfache Funktion : einerseits dienen sie zur Aussteifung des Tragwerks für die Bahnen 25a, 25b... ; zum anderen dienen Sie als Auflager der Matten 32, so daß diese nicht übermäßig durchhängen können. Schließlich können die als Hohlkörper (Rohre) ausgebildeten Längsabstützungen 54 als durchgehende Heizorgane eingesetzt werden, indem ein Heizmedium, insbesondere erwärmtes Wasser, durch die miteinander verbundenen Längsabstützungen 54 hindurchgeleitet wird. Durch diese unterhalb des Tragbodens 21 angeordnete Heizung ist es möglich, eine optimale Temperierung der Stallung unmittelbar im Bereich des Aufenthalts der Tiere zu gewährleisten. Die Heizung kann auch in anderer Weise ausgebildet und unterhalb des Tragbodens 21 angeordnet sein.

Aufbau und Funktionsweise des wie beschrieben ausgebildeten Tragbodens 21 sind derart, daß dieser lediglich als Obertrum ausgebildet ist. Im Bereich des Untertrums der Förderkette 51 befinden sich demnach keine Bahnen 25a, 25b... Werden diese zum Entstallen der Tiere in Bewegung gesetzt, wird zugleich ein am Ende des Tragbodens 21 angeordnetes, quergerichtes Fanggitter 55 mitgefördert. Dieses verhindert ein Abspringen der Tiere über den freien rückseitigen Rand des Tragbodens 21.

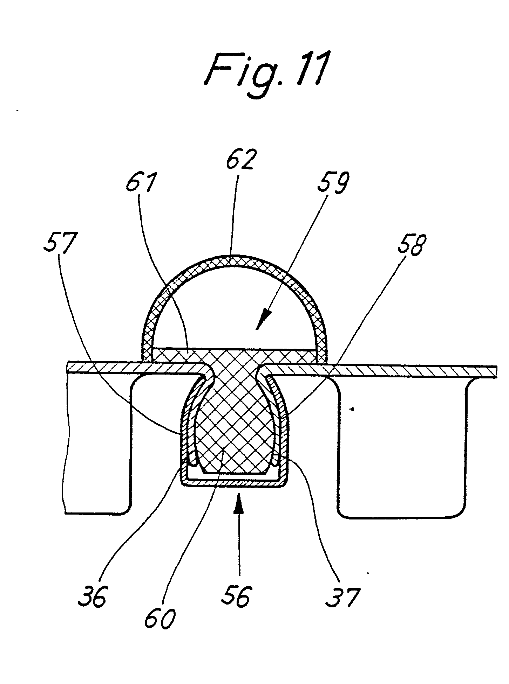

In Fig. 11 ist eine Alternative zu der (lösbaren) Klemmverbindung zwischen benachbarten Matten 32 gemäß Fig. 7 in einem Querschnitt dargestellt. Die randseitigen Schenkel 36 und 37 der benachbarten Matten 32 finden hier Aufnahme in einem oben offenen Hohlprofil in Gestalt einer U-Schiene 56. Diese besteht vorzugsweise aus starrem, belastbarem Werkstoff, insbesondere Metall. Die U-Schiene 56 erhält dadurch eine Trag- und Abstützfunktion für die Bahn im Bereich der Mattenverbindung. Aufrechte Profilschenkel 57 und 58 sind nach innen geformt und bilden dadurch für die eingeklemmten Schenkel 36, 37 eine Hinterschneidung.

Für die Fixierung der Schenkel 36, 37 in der U-Schiene 56 dient ein Klemmprofil 59 aus druckfestem Werkstoff, insbesondere Hart-PVC. Das Klemmprofil 59 ist mit einem Klemmstück 60 passend bzw. formschlüssig in die U-Schiene 56 eingedrückt, und zwar unter Fixierung der Schenkel 36, 37 an den seitlichen Profilschenkeln 57, 58. Ein sich außerhalb der U-Schiene 56 erstreckender Querflansch 61 liegt auf der Oberseite der Matten 32 auf. Der Querflansch 61 ist aber nach oben abgepolstert, und zwar durch einen hochgewölbten Wulstkörper 62, der, wie im vorliegenden Fall, einen luftgefüllten Hohlraum mit ausreichender Polsterwirkung schafft, alternativ aber auch im Sinne des Ausführungsbeispiels gemäß Fig. 7 mit Schaumstoff ausgefüllt sein kann.

Die Klemmverbindung ermöglicht eine leichte, problemlose Montage des Tragbodens 21 durch Verbindung von Matten 32 miteinander.

Bezugszeichenliste

20 Stallboden
21 Tragboden
22 Rohr
23 Futtergerät
24 Tränkeeinrichtung
25a Bahn
25b Bahn
25c Bahn
26 Pfeil
27 Querförderer
28 Motor
29 Öffnung
30 Umlenkwalze
31 Motor
32 Matte
33 Tragprofil
33a Tragprofil
34 Gitteröffnung
35 Steg
36 Schenkel
37 Schenkel

38 Tragstange
39 Profil
40 Hohlkörper
41 Unterprofil
42 Klemmschenkel
43 Stützbogen
44 Rohrprofil
45 Oberprofil
46 Nase
47 Schaumstoff
48 Wulst
49 Tragschiene
50 Tragschiene
51 Förderkette
52 Tragstütze
53 Querträger
54 Längsabstützung
55 Fanggitter
56 U-Schiene
57 Profilschenkel
58 Profilschenkel
59 Klemmprofil
60 Klemmstück
61 Querflansch
62 Wulstkörper

**Patentansprüche**

1. Einrichtung für die Haltung von Kleintieren, insbesondere Mastgeflügel, wie Hähnchen, in einer Stallung mit einem durchgehenden, als Förderer ausgebildeten, gitterförmigen Tragboden (21) aus Kunststoff, der von sich quer zur Förderrichtung desselben sowie etwa parallel zur Tragbodenebene erstreckenden Tragstangen (38), die mit seitlichen Förderorganen (Förderketten 51) wirkverbunden sind, durchsetzt ist, dadurch gekennzeichnet, daß der Tragboden (21) aus sich kreuzenden Tragprofilen (33) aus elastischem, weichem Material, insbesondere Weich-PVC besteht und an der Oberseite jeweils oberhalb der Tragstangen (38) weiche, elastisch nachgiebige Erhöhungen aufweist.

2. Einrichtung nach Anspruch 1, dadurch gekennzeichnet, daß die an der Oberseite des Tragbodens (21) angeordneten weichen, elastisch nachgiebigen Erhöhungen rohr- bzw. schlauchförmige Hohlkörper (40) sind.

3. Einrichtung, nach Anspruch 1 oder 2, bei der der Tragboden (21) aus mehreren aneinander anschließenden Bahnen (25a, 25b...) besteht, dadurch gekennzeichnet, daß die Tragboden-Bahnen (25a, 25b...) jeweils aus miteinander verbundenen Matten (32) bestehen.

4. Einrichtung nach Anspruch 3, dadurch gekennzeichnet, daß die Matten (32) einer Bahn (25a, 25b...) durch formschlüssige Mattenkupplungen miteinander verbunden sind.

5. Einrichtung nach Anspruch 4, dadurch gekennzeichnet, daß randseitige Tragprofile (33a) der benachbarten Matten (32) durch Klemmprofile (Unterprofil 41, Oberprofil 45) miteinander verbunden sind.

6. Einrichtung nach Anspruch 5, dadurch gekennzeichnet, daß ein (starres) Unterprofil (41) mit Klemmschenkeln (42) von unten her in die randseitigen Tragprofile (33a) eintritt und in diesen durch ein von oben her eingeführtes Oberprofil (45) unter Festklemmen von Teilen der Tragprofile (33a) fixiert ist.

7. Einrichtung nach Anspruch 6, dadurch gekennzeichnet, daß die Tragprofile (33a) bzw. deren außenliegender Schenkel (36, 37) durch quergerichtete Vorsprünge und Vertiefungen (Nase 46) unter Festklemmen verformt sind.

· 8. Einrichtung nach einem der Ansprüche 4 bis 7, dadurch gekennzeichnet, daß die Mattenkupplungen oberseitig mit einer weichen, nachgiebigen Abdeckung, insbesondere aus Schaumstoff (47), versehen sind.

9. Einrichtung nach Anspruch 8, dadurch gekennzeichnet, daß die Abdeckung aus Schaumstoff (47) eine Erhöhung, insbesondere einen oberseitig abgerundeten Wulst (48) bildet.

10. Einrichtung, nach einem der Ansprüche 1 bis 9, mit seitlichen an den Tragstangen (38) angreifenden Förderorganen in Form von endlosen Förderketten (51), die in seitlich offenen U-Schienen geführt sind, die seitlich an aufrechten Tragstützen (52) angeordnet sind, dadurch gekennzeichnet, daß die Tragstützen (52) durch Querträger (53) und diese durch Längsabstützungen (54) gegeneinander versteift sind.

11. Einrichtung nach Anspruch 10, dadurch gekennzeichnet, daß die Längsabstützungen (54) als Rohre ausgebildet sind.

12. Einrichtung nach einem der Ansprüche 1 bis 11, dadurch gekennzeichnet, daß unmittelbar unterhalb des Tragbodens (21) bzw. der Bahnen (25a, 25b...) eine Heizung angeordnet ist, insbesondere unter Verwendung der rohrförmigen Längsabstützungen (54) zur Aufnahme eines Heizmediums (Wasser).

**Claims**

1. Device for keeping small animals, in particular poultry for fattening, such as cockerels, in a stall with a continuous lattice-type support base (21) of synthetic material constructed as a conveyor, passing through which are support rods (38) extending at right angles to the conveying direction of the latter and approximately parallel to the plane of the support base, which support rods are in operative connection with lateral conveying members (conveying chains 51), characterised in that the support base (21) consists of intersecting support profiles (33) of resilient, soft material, in particular soft PVC and on the upper side respectively above the support rods (38) comprises soft, elastically yielding elevations.

2. Device according to Claim 1, characterised in that the soft, elastically yielding elevations arranged on the upper side of the support base (21) are tubular or hose-shaped hollow members (40).

3. Device according to Claim 1 or 2, in which the support base (21) consists of several webs (25a, 25b...) adjoining each other, characterised in that the support base webs (25a, 25b...) each consist of mats (32) connected to each other.

4. Device according to Claim 3, characterised in that the mats (32) of a web (25a, 25b) are connected to each other by positive mat connections.

5. Device according to Claim 4, characterised in that support profiles (33a) at the edge of adjacent mats (32) are connected to each other by clamping profiles (lower profile 41, upper profile 45).

6. Device according to Claim 5, characterised in that a (rigid) lower profile (41) with clamping sides (42) enters the support profiles (33a) on the edge from below and is fixed in the latter by an upper profile (45) introduced from above with clamping of parts of the support profiles (33a).

7. Device according to Claim 6, characterised in that the support profiles (33a) or their outermost sides (36, 37) are deformed by transversely directed projections and recesses (lug 46) at the time of clamping.

8. Device according to one of Claims 4 to 7, characterised in that the mat connections are provided on the upper side with a soft, resilient covering, in particular of foam material (47).

9. Device according to Claim 8, characterised in that the covering of foam (47) forms an elevation, in particular a bead (48) which is rounded off on the upper side.

10. Device according to one of Claims 1 to 9, with lateral conveying members in the form of endless conveying chains (51) acting on the support rods (38), which chains are guided in U-rails open on the side, which are arranged laterally on upright support members (52), characterised in that the support members (52) are strengthened by transverse supports (53) and the latter are strengthened with respect to each other by longitudinal supports (54).

11. Device according to Claim 10, characterised in that the longitudinal supports (54) are constructed as tubes.

12. Device according to one of Claims 1 to 11, characterised in that provided directly below the support base (21) or the webs (25a, 25b...) is a heating arrangement, in particular using the tubular longitudinal supports (54) for receiving a heating medium (water).

**Revendications**

1. Dispositif pour loger de petits animaux, en particulier de la volaille à engraisser, tels que des poulets, dans un local avec un plancher porteur (21) treillissé, réalisé comme un convoyeur, continu, en matière plastique, traversé de barres porteuses (38) s'étendant transversalement par rapport à la direction de transport de ce plancher porteur et à peu près parallèlement au plan du plancher porteur, les barres porteuses étant reliées de façon fonctionnelle à des organes de transport latéraux (chaînes transporteuses 51) caractérisé par le fait que le plancher porteur (21) se compose de profilés porteurs (33) qui se croisent et qui sont réalisés en matériau élastique mou, en particulier en PVC mou, et qu'il présente, sur le côté supérieur au-dessus des barres porteuses (38), des exhaussements mous, élastiques et souples.

2. Dispositif selon la revendication 1, caractérisé par le fait que les exhaussements mous, élastiques et souples disposés sur le côté supérieur du plancher porteur (21) sont constitués par des corps creux (40) en forme de tube ou de flexible.

3. Dispositif selon la revendication 1 ou 2, dans lequel le plancher porteur (21) se compose de plusieurs voies contiguës (25a, 25b, ...), caractérisé par le fait que les voies (25a, 25b, ...) du plancher porteur se composent chacune de mats (32) reliés entre eux.

4. Dispositif selon la revendication 3, caractérisé par le fait que les mats (32) d'une voie (25a, 25b, ...) sont reliés entre eux par des accouplements réalisés par correspondance de forme.

5. Dispositif selon la revendication 4, caractérisé par le fait que les profilés porteurs (33a), côté bord, des mats voisins (32) sont reliés entre eux par des profilés de serrage (profilé inférieur 41, profilé supérieur 45).

6. Dispositif selon la revendication 5, caractérisé par le fait qu'un profilé inférieur (41) (rigide), avec des bras de serrage (42), pénètre par endessous dans les profilés porteurs (33a), côté bord, et est fixé dans ceux-ci par un profilé supérieur (45) introduit par le haut, avec serrage des parties des profilés porteurs (33a).

7. Dispositif selon la revendication 6, caractérisé par le fait que les profilés porteurs (33a) et leurs bras étendus (36, 37) sont déformés, lors du serrage, par des saillies et des rentrants (talon 46).

8. Dispositif selon l'une des revendications 4 à 7, caractérisé par le fait que le dessus des accouplements de mats est recouvert d'un recouvrement mou et souple, en particulier par un produit alvéolaire (47).

9. Dispositif selon la revendication 8, caractérisé par le fait que le recouvrement en produit alvéolaire (47) forme un exhaussement, en particulier un bourrelet arrondi sur le dessus (48).

10. Dispositif selon l'une des revendications 1 à 9, comportant des organes de transport latéraux mordant sur les barres porteuses (38), organes en forme de chaînes transporteuses (51) sans fin qui sont guidées dans des rails en U ouverts sur le côté, ces rails étant disposés latéralement sur les bras porteurs (52) droits, caractérisé par le fait que les bras porteurs (52) sont raidis l'un contre l'autre par des traverses (53), alors que ces traverses le sont par des supports longitudinaux (54).

11. Dispositif selon la revendication 10, caractérisé par le fait que les supports longitudinaux (54) sont en forme de tubes.

12. Dispositif selon l'une des revendications 1 à 11, caractérisé par le fait que, immédiatement au-dessous du plancher porteur (21) ou des voies (25a, 25b, ...), est disposé un chauffage, en particulier un chauffage faisant appel aux supports longitudinaux (54) en forme de tube pour loger un fluide de chauffe (eau).

*Fig. 1*

Fig. 2

0 051 844

Fig. 3

Fig. 4

Fig. 5

Fig. 6

0 051 844

Fig. 7

Fig. 8

*Fig. 9*

40   32 (25a, 25b)   49

51   53   54   51

50

52   52

0 051 844

Fig. 10

52    49 (50)                                              52

53

54

54

49 (50)

0 051 844

# Fig. 11